Europäisches Patentamt

European Patent Office

Office européen des brevets

(19)

(11) Publication number: **0 221 757**
**A2**

# (12) EUROPEAN PATENT APPLICATION

(21) Application number: **86308387.9**

(22) Date of filing: **28.10.86**

(51) Int. Cl.⁴: **A 23 G 9/02**
**A 23 G 9/28, A 23 G 9/24**
**A 23 G 9/26**

(30) Priority: **29.10.85 JP 242193/85**

(43) Date of publication of application:
**13.05.87 Bulletin 87/20**

(84) Designated Contracting States:
**BE DE ES FR GB IT**

(71) Applicant: **MORINAGA & CO., LTD.**
**1-No. 33, 5-chome Shiba**
**Minato-ku Tokyo 108(JP)**

(72) Inventor: **Mitsugi, Mikio**
**5-34-1, Sendagi Bunkyo-ku**
**Tokyo(JP)**

(72) Inventor: **Inase, Akira**
**4-6-1, Kitaterao Tsurumi-ku**
**Yokohama-shi Kanagawa(JP)**

(74) Representative: **Crisp, David Norman  et al,**
**D. YOUNG & CO. 10 Staple Inn**
**London, WC1V 7RD(GB)**

(54) Ice cream containing chocolate and method for producing the same.

(57) In an ice cream product containing chocolate and a method for producing the same, chocolate flakes are contained inside the ice cream product so that complex patterns of intermittently arranged chocolate streaks are presented in any section appearing in biting of the product.

EP 0 221 757 A2

Croydon Printing Company Ltd.

Ice cream containing chocolate and method
for producing the same

------------------------------------------------

The present invention relates to a novel ice cream product containing chocolate and a method for producing the same.

Hitherto, various kinds of ice cream products have been proposed, in which chocolate may be incorporated. For example, an ice cream product wherein the surface is coated with chocolate is known. In this product, the chocolate layer is only on the outer peripheral surface of the product, which therefore does not have a very interesting appearance. In addition, it is not possible to make a thin chocolate layer and the chocolate layer therefore exfoliates when the product is eaten. This results in an unpleasant feeling in the mouth since the overall texture of the ice cream product is not smooth and the proportion of chocolate to ice cream in the product is not constant in the mouth and texture of the ice cream product is therefore not very well-balanced.

It is also known to insert chocolate granules, such as chocolate-chips, into ice cream, the chocolate being dispersed in the ice cream to produce a mixture thereof, which mixture is agitated to produce a final ice cream product. In this kind of ice cream product, it is possible to employ any desired ratio of chocolate to ice cream, and also possible to keep such ratio constant in the mouth. In this ice cream product, however, since chocolate takes the form of relatively large and hard grains, the chocolate gives a bad feeling on eating in contrast with the softness of ice cream. It is also hard to mix the chocolate grains with the ice cream in the mouth so that a desirable feel on eating is not obtained.

It has also been proposed to prepare a multilayer ice cream product in which a plurality of thin ice cream layers and a plurality of thin chocolate layers are alternately piled up to form a multilayer construction in the product. GB Application 2108363 disclosed a method for producing such a multilayer ice cream product, in which thin sheet-like ice cream is supplied from a nozzle onto a belt to form an ice cream layer on which is provided a thin chocolate layer, which in turn is further provided with another thin ice cream layer, and these alternate piling-up operations of ice cream layer and chocolate layer are repeated to form a multilayer arrangement. However, in order to produce such a multilayer ice cream product on an industrial scale, huge and therefore expensive production facilities and space are required.

In accordance with one aspect of the present invention, there is provided an ice cream product containing a large number of chocolate flakes each of moderate size and relatively evenly dispersed in ice cream, in any cross section of which ice cream product there is presented a complex pattern of intermittently arranged streaks of chocolate corresponding to streamlines of the ice cream having been charged into a suitable container or the like.

In another aspect of the present invention there is provided a method for producing an ice cream product in which chocolate is ejected at high speed toward a stream of ice cream issuing from a nozzle, so that the chocolate collides against the outer peripheral surface of the stream of the ice cream to deeply enter the latter, and whereby thin strip-like chocolate layers are formed in the stream of ice cream which flows from the nozzle and charged into a cone, mold or the like disposed downstream of the nozzle.

In the method of the invention, the stream of ice cream issuing from the nozzle may be provided with at least one concave portion, i.e. one or more grooves in the stream which extend radially toward the central axis of the stream. The chocolate may be projected into a groove and thus may easily enter the ice cream through the groove.

When chocolate is introduced into the stream of ice cream a plurality of streaks of chocolate are formed in the stream of ice cream, the thus produced ice cream product is provided with a desirable complex form.

It is preferable that the chocolate is injected into the stream of ice cream at a position immediately downstream of the nozzle issuing the ice cream or at a position immediately under a position where the above-mentioned concave portion, i.e. a groove in the stream of ice cream is formed.

Ice cream within the context of the invention includes standard "ice cream" as well as low-fat ice cream, water-ice, and imitation ice cream. Chocolate means chocolate derived from cocoa butter as well as imitation chocolate. It is desirable that chocolate is solidified in the ice cream in the form of a thin layer which may be crunched to pieces in the mouth when the thus produced ice cream product is eaten.

Embodiments according to the invention will be hereinafter described by way of non-limiting example with reference to the accompanying drawings in which:

Figures 1 and 2 are partially broken perspective views of two embodiments of the invention;

Figure 3 is a cross sectional view of a stream of ice cream when chocolate is ejected at low speed;

Figure 4 is a cross sectional view of a stream of ice cream when chocolate is ejected at high speed;

Figure 5 is a perspective view of part of a production apparatus for working the method of the invention;

Figure 6 is a sectional view taken along the line A-A of Figure 5;

Figure 7 is a sectional view taken along the line B-B of Figure 5;

Figure 8 is a sectional view taken along the line C-C of Figure 5; and

Figures 9 and 10 are views showing contours of outlet openings of different nozzles for issuing ice cream.

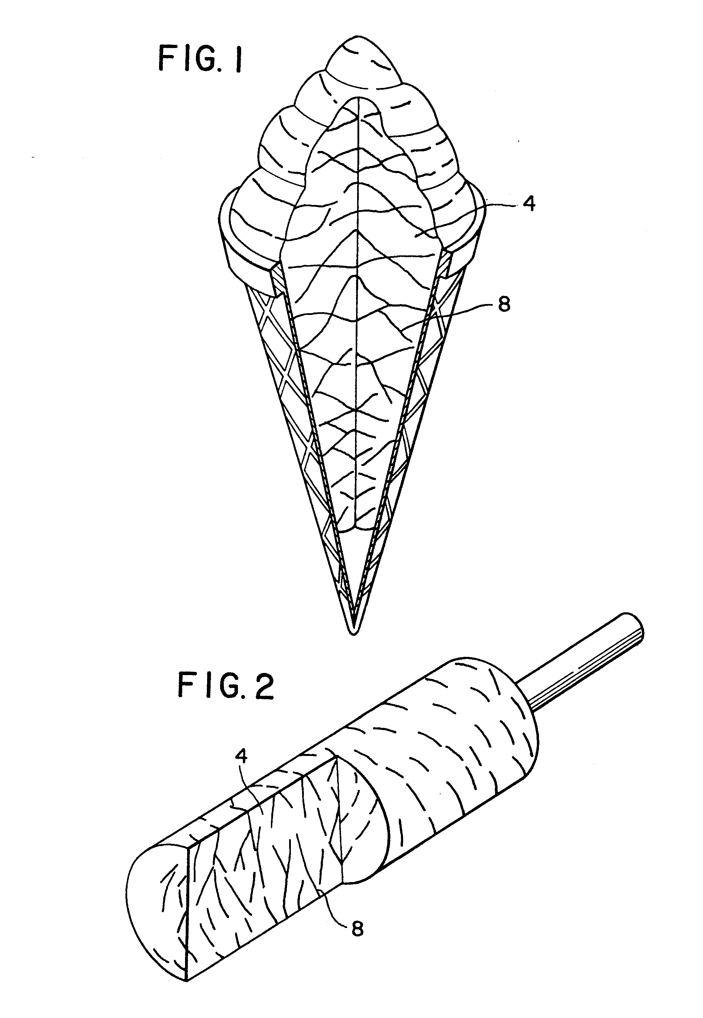

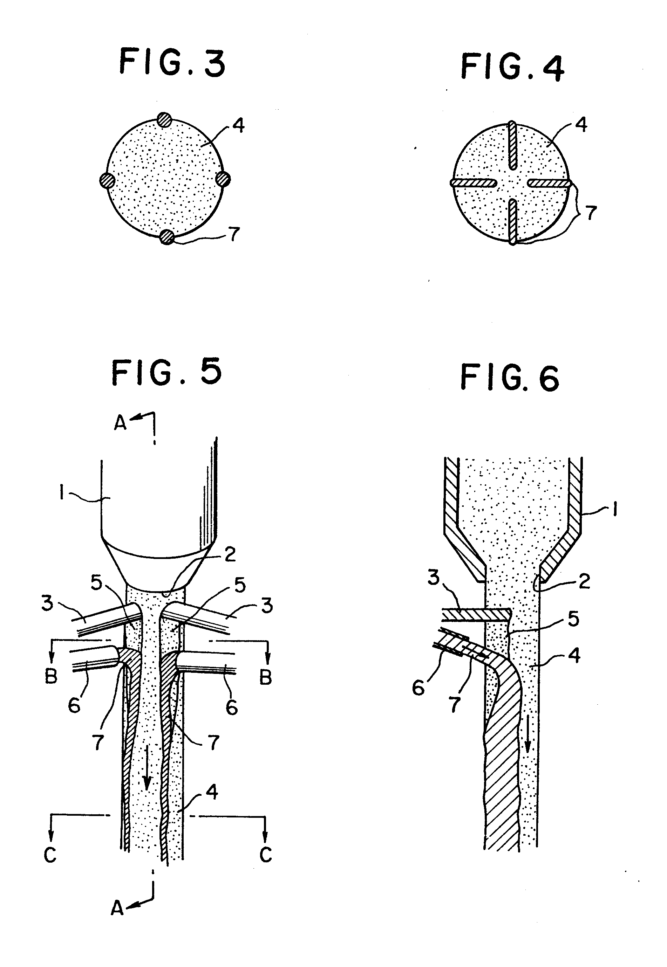

In Figures 1 and 2 are shown embodiments of an ice cream product of the present invention, one of which embodiment takes the form of an ice cream product in an ice cream cone, and the other of which takes the form of a stick ice cream product molded in a suitable mold.

In the present invention, molten chocolate is ejected at a high speed towards ice cream issuing from a nozzle (hereinafter referred to as the ice cream nozzle), so that the chocolate deeply penetrates the ice cream flowing from the nozzle. As a result, before the ice cream is charged to a cone, mold or the like under the ice cream nozzle, the thus ejected molten chocolate is squeezed into the ice cream to take a thin plate-like form so that thin strip-like chocolate layers 8 are eventually produced in the ice cream 4.

When chocolate is ejected at a low speed, the chocolate solidifies on the surface of the ice cream without deeply entering the ice cream, so that a stream of ice cream flowing down takes, in its cross section, a configuration shown in Figure 3. As a result, the thus ejected molten chocolate solidifies on the surface of the ice cream and takes string-like forms so that the thus produced ice cream product contains broken stick-like solid chocolate which deteriorates it in appearance and fails to present a smooth texture in the mouth when it is eaten. In particular, such solid chocolate is not easily crunched in the mouth and gives a bad feeling which is so different from softness of ice cream to lead to the same poor feeling as that of any other hitherto proposed ice cream product.

In contrast with known products, in the present invention molten chocolate is ejected at a high speed such as to deeply enter ice cream, so that the thus ejected molten chocolate is squeezed and solidified in the ice cream to produce thin strip-like chocolate layers in the ice cream. As a result, the stream of ice cream containing such thin strip-like chocolate layers takes, in its cross section, a configuration shown in Figure 4, in which configuration the chocolate takes thin streak-like forms corresponding to the paths through which the molten chocolate enters the ice cream.

In ejecting molten chocolate, when at least one concave portion (i.e. one or more axial grooves formed in the stream of ice cream) is present, the chocolate can more deeply enter the ice cream to produce thinner chocolate layers in the ice cream.

In order to form the concave portion, i.e. the groove in the downflowing stream of ice cream, at least one interference means such as the interference bar 3 shown in Figure 5 may be provided in a position immediately below the outlet opening 2 of the ice cream nozzle 1 so as to partially interfere with the stream of ice cream 4.

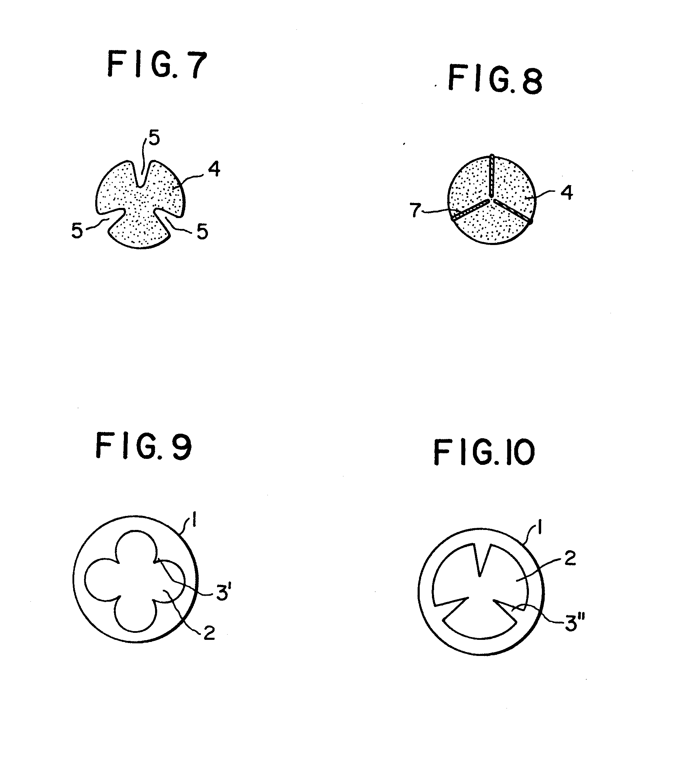

In place of the interference means, it is possible to contour the outlet opening 2 of the ice cream nozzle 1 so as to take configurations e.g. shown in Figures 9 and 10 in which at least one projection 3', 3'' extends radially toward a center of the outlet opening 2 of the ice cream nozzle 1, which projection gives the same effect as that of the interference means.

When the bar 3 interferes with the stream of ice cream, the concave portion, i.e. groove 5 is formed in the stream of ice cream in a position located downstream of the bar 3, which groove 5 gradually fills up and disappears as the ice cream flows down.

As shown in Figure 5, when molten chocolate is ejected at a high speed from a nozzle 6 (hereinafter referred to as the chocolate nozzle 6) toward the concave portion 5 of the stream of ice cream, the chocolate deeply enters the ice cream and flows down together with the ice cream while the concave portion 5 of the ice cream is reduced in width. The molten chocolate is squeezed in the ice cream to become thin strip-like chocolate and is cooled and solidified.

As a result, as shown in Figure 6 which is a sectional view taken along the line A-A of Figure 5, the molten chocolate 7 deeply enters the ice cream 4 and is solidified therein to produce very thin plate-like chocolate layers in the ice cream as shown in Figure 8.

Incidentally, in ejecting the chocolate 7 toward the ice cream 4, the chocolate 7 is not necessarily directed towards the center of the stream of the ice cream 4. It is also possible to eject the chocolate 7 in a direction slightly away from the center of the stream of the ice cream 4. In this case, the ice cream is rotated about its longitudinal axis of the stream thereof due to collision with the thus ejected chocolate while flowing down, to make the chocolate layer thinner.

When the ice cream containing the thin strip-like chocolate is charged into a suitable container or the like, the chocolate layers flow together with the ice cream and present curved streamlines, so that the chocolate layers having been already solidified are crunched to small pieces.

As a reuslt, in the container or the like, the thus produced solid chocolate flakes are disposed along the streamlines of ice cream charged to the container or the like to present complex and interesting patterns of chocolate flakes intermittently disposed along the streamlines of ice cream when it is charged to the container or the like.

The following non-limiting Examples serve to further illustrate the invention:

EXAMPLE 1

An apparatus as shown in Figure 5 is employed provided with the interference bar 3 disposed immediately under the outlet opening 2 of the ice cream nozzle 1, and immediately under which interference bar 3 is provided chocolate nozzle 6. In such apparatus, ice cream is issued from the ice cream nozzle 1 downward while chocolate is ejected at a high speed from the chocolate nozzle 6. The ice cream containing the chocolate is charged to a cone disposed under the ice cream nozzle 1, and cooled and solidified to produce an ice cream product received in a cone.

This ice cream product as shown in Figure 1 is provided, in its inside, with a very interesting pattern of intermittently arranged chocolate streaks corresponding to the streamlines of the ice cream so that the product is a very attractive ice cream product.

In addition, when such product is eaten, chocolate contained in the product is crunched to pieces since the chocolate takes the form of very thin flakes, so that the chocolate is well mixed with ice cream in the mouth to increase the taste and feel of the ice cream product.

EXAMPLE 2

When ice cream is issued downward from the ice cream nozzle 1 contoured in its outlet opening 2 as shown in Figure 9, a concave portion is formed in the stream of ice cream, into which concave portion is ejected at a high speed chocolate from a chocolate nozzle which is disposed immediately below the outlet opening 2 of the ice cream nozzle 1. Ice cream containing the chocolate is produced and charged to a mold in which is inserted a stick. Then the ice cream is cooled to produce an ice cream bar as shown in Figure 2.

This ice cream bar possesses a very interesting internal pattern with intermittently arranged chocolate streaks corresponding to the streamlines of the ice cream having been charged.

In addition, when such stick product is eaten, chocolate contained in the product is crunched to pieces and mixed with ice cream in the mouth to present a very pleasing taste.

In the ice cream product of the invention, a large number of chocolate flakes are contained in the ice cream, which flakes are so arranged that they correspond to the streamlines of ice cream charged. Consequently, when the ice cream product is eaten, such a product provides, in its cross section, very interesting patterns of intermittently arranged chocolate streaks following the streamlines of the ice cream charged, which patterns make the product very interesting.

In addition, when the product is eaten, the thin layers of chocolate are easily crunched to pieces in the mouth so that the texture of this product is very smooth. Further, in crunching chocolate, an amusing sound may be produced to enhance the taste of the product. It is also possible to keep the ratio of chocolate to ice cream constant in the mouth when the ice cream product of the present invention is eaten, so that the taste of the product is further enhanced.

CLAIMS:

1.      An ice cream product containing chocolate in the form of a plurality of flakes substantially uniformly dispersed in the ice cream so that the product presents, in any cross section thereof, a complex pattern of intermittently arranged chocolate streaks corresponding to streamlines of the ice cream having been charged into a container or the like.

2.      A method for producing an ice cream product containing chocolate wherein ice cream is issued from an ice cream nozzle to a cone, mold or the like disposed downstream of the nozzle, characterised in that chocolate is ejected toward a stream of ice cream issued from the nozzle so as to deeply penetrate said ice cream and thereby form a thin strip-like chocolate layer in said ice cream.

3.      A method according to claim 2, wherein the stream of ice cream issuing from said ice cream nozzle is provided with a longitudinal groove, toward which groove said chocolate is ejected.

4.      A method according to either of claims 2 and 3 wherein a plurality of streaks of chocolate are ejected to enter said ice cream.

5.      A method according to claim 4, wherein a plurality of longitudinal grooves are formed in the stream of ice cream, and chocolate is ejected into each of the grooves.

6.      A method according to any one of claims 2 to 5, wherein chocolate is ejected toward the center of the stream of ice cream.

7.      A method according to any one of claims 2 to 5, wherein chocolate is ejected in a direction not towards the center of the stream of ice cream.

FIG. 1

FIG. 2

## FIG. 3

## FIG. 4

## FIG. 5

## FIG. 6

FIG. 7

FIG. 8

FIG. 9

FIG. 10